(19) Europäisches Patentamt

European Patent Office

Office européen des brevets

(11) **EP 0 677 320 B1**

(12) **EUROPÄISCHE PATENTSCHRIFT**

(45) Veröffentlichungstag und Bekanntmachung des Hinweises auf die Patenterteilung:
**05.01.2000  Patentblatt 2000/01**

(51) Int. Cl.$^7$: **B01D 53/86**

(21) Anmeldenummer: **95890037.5**

(22) Anmeldetag: **21.02.1995**

(54) **Verfahren zur katalytischen Reduktion von in den Rauchgasen einer Feuerung mit flüssigen Brennstoffen enthaltenen, Stickoxiden mit Ammoniak und Verfahren zur Regenerierung eines Katalysators**

Process for the catalytic reduction of nitrogen oxides in exhaust gases from liquid fuel combustion, using ammonia and process for catalyst regeneration

Procédé pour la réduction catalytique d'oxydes d'azote, contenu dans les gaz d'échappement de la combustion de combustibles liquides, avec l'ammoniac et procédé pour la régénération d'un catalyseur

(84) Benannte Vertragsstaaten:
**AT BE CH DE DK ES FR GB GR IE IT LI NL PT SE**
Benannte Erstreckungsstaaten:
**SI**

(30) Priorität: **15.04.1994 AT 79194**

(43) Veröffentlichungstag der Anmeldung:
**18.10.1995  Patentblatt 1995/42**

(73) Patentinhaber:
**INTEGRAL UMWELT- UND ANLAGENTECHNIK GESSELLSCHAFT m.b.H.**
**A-1040 Wien (AT)**

(72) Erfinder:
• **Budin, Richard**
**A-2511 Pfaffstätten (AT)**
• **Lechner, Christian, Dipl.-Ing.**
**A-8233 Lafnitz (AT)**

(74) Vertreter:
**Atzwanger, Richard, Dipl.-Ing.**
**Patentanwalt**
**Mariahilfer Strasse 1c**
**1060 Wien (AT)**

(56) Entgegenhaltungen:
**EP-A- 0 505 881        DE-A- 2 448 647**
**DE-A- 3 641 773**

**Beschreibung**

Die gegenständliche Erfindung betrifft ein Verfahren zur katalytischen Reduktion von in den Rauchgasen einer mit flüssigen fossilen, vanadiumhaltigen Brennstoffen betriebenen Feuerung enthaltenen Stickoxiden mit Ammoniak (DENOX-Verfahren), bei weichem die Rauchgase über einen DENOX-Katalysator auf der Basis eines keramischen Materials mit katalytisch aktiven Metalloxiden geleitet werden. Weiters betrifft die Erfindung ein Verfahren zur Regenerierung eines in einer DENOX-Anlage zur katalytischen Reduktion von in den Rauchgasen einer mit beliebigen Brennstoffen, ausgenommen flüssigen fossilen Brennstoffen, insbesondere mit festen fossilen Brennstoffen, betriebenen Feuerung enthaltenen Stickoxiden mit Ammoniak in Gebrauch gewesenen DENOX-Katalysators auf der Basis eines keramischen Materials mit katalytisch aktiven Metalloxiden, dessen Wirkungsgrad niedriger als sein ursprünglicher Wirkungsgrad ist.

Die gegenständliche Erfindung betrifft somit das Gebiet der Reinigung von Rauchgasen aus Feuerungsanlagen mit dem Ziel, deren Gehalt an Stickoxiden weitestgehend herabzusetzen.

Stickoxide entstehen bei allen Verbrennungen als schädliche Nebenprodukte durch Oxidation des in der Verbrennungsluft oder im Brennstoff selbst enthaltenen Stickstoffs. Sie stellen mengenmäßig den größten Teil der gasförmigen Schadstoffe dar, die von Menschen durch Verbrennungsprozesse hervorgerufen werden. Feuerungsanlagen im vorliegenden Sinne werden in den verschiedenen kalorischen Kraftwerken, in Dampf- oder Heißwassererzeugungsanlagen, Anlagen zur Durchführung von Glasschmelzen sowie anderen Schmelz- und Röstprozessen und sonstigen Verbrennungsanlagen eingesetzt.

Verfahren zur Abtrennung von Stickoxiden aus Rauchgasen werden häufig als Denoxierungsverfahren (DENOX-Verfahren) bezeichnet. Auch der Ausdruck "Entstickungsverfahren" hat sich eingebürgert. Dieser ist aber irreführend, da nicht der Stickstoff, sondern die Stickoxide aus dem Rauchgas entfernt werden sollen.

Bereits vor etwa zwanzig Jahren wurden in Japan die ersten Großfeuerunganlagen mit katalytischen DENOX-Anlagen ausgerüstet. Das weltweit gesteigerte Umweltbewußtsein führte dazu, daß auch in vielen westlichen Ländern strenge gesetzliche Auflagen hinsichtlich der erlaubten Abgaswerte eingeführt wurden. Dadurch wurde die Entwicklung wirkungsvoller Abgasreinigungsanlagen stark vorangetrieben. Von den weltweit hergestellten Katalysatoren wird bereits ein Drittel zur katalytischen Abgasreinigung verwendet.

Das in modernen Feuerungsanlagen zur Beseitigung der Stickoxide in Gebrauch stehende DENOX-Verfahren ist ein selektives katalytisches Reduktionsverfahren, abgekürzt auch SCR-Verfahren (Selective Catalytic Reduction) genannt, bel weichem unter Einsatz von Ammoniak als Reduktionsmittel in Gegenwart eines Katalysators die Stickoxide zu Stickstoff und Wasser umgesetzt werden. Ammoniak kann dabei auch durch Einsatz von mindestens einer unter den Systembedingungen Ammoniak bildenden Verbindung zur Verfügung gestellt werden (z.B. Harnstoff).

Unter dem Begriff Stickoxide NOx sind im vorliegenden Fall in erster Linie Stickstoffmonoxid NO und Stickstoffdioxid $NO_2$ zu verstehen. Diese beiden Stickstoffoxide bilden zu mehr als etwa 95 % das in Feuerungsabgasen enthaltene NOx. Durch die Kontaktreaktion am Katalysator wird NOx mit Ammoniak ($NH_3$) zu Stickstoff und Wasserdampf, welche beide natürliche Bestandteile der Luft darstellen, reduziert.

Die beim SCR-Verfahren auftretenden Reaktionen laufen im wesentlichen nach folgenden Gleichungen ab, wobei in manchen Fällen der in den Verbrennungsabgasen noch enthaltene Sauerstoff mitbeteiligt ist:

$$4\,NO + 4\,NH_3 + O_2 \rightarrow 4\,N_2 + 6\,H_2O$$

$$NO_2 + NO + 2\,NH_3 \rightarrow 2\,N_2 + 3\,H_2O$$

$$2\,NO_2 + 4\,NH_3 + O_2 \rightarrow 3\,N_2 + 6\,H_2O$$

$$6\,NO_2 + 8\,NH_3 \rightarrow 7\,N_2 + 12\,H_2O$$

Im Temperaturbereich zwischen 150°C und 450°C können Katalysatoren die Reduktion der Stickoxide in Gegenwart von Ammoniak erheblich beschleunigen. Die für das SCR-Verfahren benutzten aktiven Katalysatoren sind auf möglichst hohe Selektivität eingestellt. Dies verhindert in dem angegebenen Temperaturbereich weitestgehend unerwünschte Nebenreaktionen.

Da katalytische Reaktionen in der Regel an der Oberfläche des Katalysators erfolgen, müssen die Katalysatoren so gestaltet sein, daß sie den Rauchgasen eine möglich große katalytisch aktive Oberfläche zur Verfügung stellen. Dies wird einerseits durch die Formgebung des Katalysators, wie beispielsweise durch dessen Ausbildung in Gitter- oder Wabenform, und andererseits durch Formung der Katalysatoroberfläche selbst, beispielsweise auf Basis eines porösen keramischen Materials, in weichem die katalytisch aktiven Bestandteile, wie die Metalloxide Vanadiumpentoxid $V_2O_5$ und Wolframoxid $WO_3$, verteilt sind, erreicht.

Der Katalysator kann auch vollständig aus einem Keramikwerkstoff hergestellt sein, wie dies für den vollkeramischen Honeycomb-Katalysator, weicher mit homogenem Aufbau bzw. mit einer entsprechenden Beschichtung zu einem Formkörper extrudiert und in der Folge getrocknet und gebrannt wird, zutrifft. Der Katalysator kann aber auch als Beschichtung auf einem Trägermaterial, z.B. auf einem Metallblech, aufgebracht sein. Dieses besteht vorzugsweise aus einem perforierten und plasmagerauhten Streckmetall.

Den auf der Katalysatoroberfläche ablaufenden chemischen Umsetzungen sind Transportprozesse vorgelagert und nachgeschaltet. Nach der Adsorption der Reaktionsteilnehmer an der inneren Oberfläche kommt es durch die chemische Kombination der Reaktionsteilnehmer mit dem Katalysator zur Herabsetzung der zur Einleitung der Reaktion erforderlichen Aktivierungsenergie und als Konsequenz zur Beschleunigung der Reaktion bzw. deren Gleichgewichtserstellung.

Die Abscheideleistung des Katalysators wird im wesentlichen von der chemischen Zusammensetzung und der physikalischen Struktur des Katalysators, dem Sauerstoffgehalt sowie der Strömungsgeschwindigkeit der Rauchgase und der Verweilzeit derselben im Katalysatorbereich beeinflußt. Andere Rauchgaskomponenten, wie Kohlendioxid, Kohlenmonoxid, Wasserdampf und Schwefeldioxid, beeinflussen die Abscheideleistung des Katalysators kaum.

Die vorstehend angeführten Hauptreaktionen basieren auf folgenden reaktionskinetischen Grundlagen:

- Adsorption eines Ammoniakmoleküls an einem Vanadinsäuremolekül,
- Bildung eines Ammonium-meta-Vanadat-Komplexes,
- Reaktion des Ammonium-meta-Vanadat-Komplexes mit einem Stickoxidmolekül,
- Desorption der Reaktionsprodukte (Stickstoff und Wasserdampf),
- Oxidation des Katalysators in seinen aktiven Ausgangszustand mit Hilfe des Sauerstoffs im Verbrennungsabgas.

Das SCR-Verfahren ist das derzeit wirksamste großtechnische Verfahren zur Minderung der von Feuerungen, Verbrennungsanlagen und verfahrenstechnischen Anlagen emittierten Stickoxide. Von den derzeit angebotenen hochwertigen DENOX-Katalysatoren werden eine hohe Aktivität, eine hohe Selektivität, ein geringer Druckverlust, eine hohe Erosionsfestigkeit, Unempfindlichkeit gegen Staubablagerungen, hohe mechanisehe und thermische Belastbarkeit u. dgl. mehr erwartet.

Zum Unterschied von Katalysatoren für industrielle Herstellungsprozesse, wo die Konzentrationen der Reaktanten in Größenordnungen von Volumsprozenten vorliegen, muß der SCR-Katalysator Verunreinigungen in Größenordnungen von einigen hundert Volums-ppm beseitigen. Diese an Katalysatoren gestellten Anforderungen sind somit sowohl in mechanischer als auch in reaktionschemischer Hinsicht sehr hoch.

Um die für die Adsorptionsvorgänge notwendige hohe Porosität, gleichbedeutend mit der spezifischen (inneren) Oberfläche des Katalysatormaterials, zu gewährleisten, wird für diesen Zweck als keramisches Material derzeit am häufigsten Titandioxid in seiner Modifikation als Anastas eingesetzt.

Der Katalysator allgemein besteht im konkreten Fall aus einzelnen blockartigen Bauteilen, die ihrerseits zu Modulen mit bestimmter Anzahl und Größe der Einzelbauteile zusammengesetzt werden, bevor sie in der Katalysatorkammer angeordnet werden.

Aber mit dem Katalysator allein ist die wirtschaftlichste und zuverlässigste Lösung noch nicht gefunden. Damit der DENOX-Reaktor seine volle Wirkung erreicht, muß beispielsweise die Strömungsführung so gestaltet werden, daß die Rauchgasgeschwindigkeit und die Verteilung des eingedüsten Reduktionsmittels im gesamten Reaktorquerschnitt möglichst gleichmäßig sind. Flugstaubablagerungen in den Katalysatorteilen und die Ammoniumsalzbildung in nachgeschalteten Anlagenteilen sind so weit als möglich zu vermeiden. Weiters müssen nach der Inbetriebnahme betriebsbegleitende Maßnahmen durchgeführt werden, um Aufschluß über das Langzeitverhalten der Katalysatoren und über den optimalen Austauschzeitpunkt zu erhalten. Sobald die Katalysatoren verbraucht sind, besteht das Erfordernis, sie umweltschonend zu entsorgen und soweit möglich der Wiederverwertung zuzuführen.

Es ist bekannt, daß bei Einsatz fester fossiler Brennstoffe, wie Steinkohle, Koks, Braunkohle oder anderen Ballastkohlen, Holz, aber auch Hausmüll oder Sonderabfall und anderen kontaminierenden Brennstoffen, die aktiven Zentren der Katalysatoren z.B. durch Anlagerung von in der Flugasche enthaltenen Alkali- und Erdalkalimetallen bzw. deren Verbindungen blockiert werden, wodurch die aktivierte $NH_3$-Adsorption zumindest teilweise verhindert wird, was zur Abnahme der Aktivität führt. Zu dieser Vergiftung der aktiven Bereiche der Katalysatoroberfläche durch zunächst irreversibel adsorbierte Katalysatorgifte kommt die Verstopfung der Poren z.B. durch gebildetes Calciumsulfat $CaSO_4$ und Ammoniumhydrogensulfat $(NH_4)HSO_4$. Da der Katalysator ursprünglich nicht wirklich zu 100 % selektiv auf eine bestimmte Reaktion eingestellt werden kann, förded er noch einige Nebenreaktionen, von denen die Konvertierung von $SO_2$ zu $SO_3$ in einer relevanten Größenordnung abläuft. Diese Reaktion wird zwar durch die Katalysatorzusammensetzung minimiert, es genügt aber der kleine Anteil von $SO_3$, um mit dem unreagierten $NH_3$ (als $NH_3$-Schlupf bezeichnet) zu versehiedenen Salzen, primär zu Ammoniumhydrogensulfat, zu reagieren bzw. sich mit der Flugasche zu verbinden. Diese Verbindungen, welche sich bei tiefen Temperaturen (Kondensation) bilden, können sich auf dem Katalysator ablagern und zusätzlich mit anklebenden Ascheteilchen (z.B. feiner Staub, $SiO_2$, $Al_2O_3$) eine Porenverstopfung und dadurch eine Aktivitätsminderung der Katalysatoren verursachen. Ammoniumsulfat spaltet oberhalb von 300°C Ammo-

EP 0 677 320 B1

niak unter Bildung von Ammoniumhydrogensulfat ab und zersetzt sich teilweise zu $N_2$, $SO_2$, $SO_3$ und $H_2O$.

Die Art der Zusammensetzung der Verbindungen, welche sich auf dem Katalysator ablagern können, ist somit von der Zusammensetzung der Flugasche, des Rauchgases und von der Temperatur abhängig. Es handelt sich dabei im allgemeinen um Alkali- und Erdalkalimetallverbindungen, welche in der Flugasche als Oxide und durch Reaktion dieser mit $SO_3$ als Sulfate enthalten sind und welche sich entweder an der Oberflache mit anderen in der Flugasche enthaltenen Verbindungen, wie z.B. $SiO_2$ und $Al_2O_3$, anlagern und die Poren verstopfen oder die aktiven Zentren durch ihre Elektronendonatoreigenschaften blockieren und dadurch die aktivierte $NH_3$-Adsorption verhindern.

Die Bildung von Ammoniumhydrogensulfat durch die Reaktion von $NH_3$, $SO_3$ und $H_2O$ im Rauchgas und der hinzutretende feine Staub verursachen beim Unterschreiten des Taupunktes von Ammoniumhydrogensulfat ebenfalls eine Porenverstopfung und dadurch eine Aktivitätsminderung der Katalysatoren. Aufgrund dieser Sachverhalte besteht für Betreiber von mit festen fossilen Brennstoffen od. dgl. arbeitenden Feuerungsanlagen das Erfordernis, die Katalysatoren nach einigen Jahren des Einsatzes durch neue zu ersetzen.

Die hohen Kosten dieser Katalysatoren, die naturgemäß eine große wirtschaftliche Belastung darstellen, haben dazu geführt, für gebrauchte Katalysatoren Regenerierungsverfahren vorzuschlagen. Es handelt sich hiebei um aufwendige mechanische und chemische Verfahren, deren Zweck darin besteht, vor allem die ursprüngliche Oberflächenbeschaffenheit der Katalysatoren weitgehend wiederherzustellen. Dazu sind Verfahren zur mechanischen und bzw. oder chemischen Abtragung bzw. Ablösung oder Abwaschung der abgelagerten Schichten erforderlich. Verfahren dieser Art können sämtliche möglichen mechanischen Verfahren, wie Sandstrahlen, Bürsten, pulsierendes Gasblasen, Beschallung etc. sowie elektrochemische oder chemische Lösungsprozesse, Behandlung mit sauren oder alkailschen Substanzen und dergl. umfassen. Die genannten Verfahren können entweder einzeln oder in geeigneter Kombination miteinander, gleichzeitig oder aufeinanderfolgend zum Einsatz gelangen.

Es hat sich jedoch bisher kein Verfahren als für den vorliegenden Zweck, die Wiederverwertung in einer DENOX-Anlage einer Kohlefeuerung als den Erfordernissen entsprechend erwiesen. Da die Verwendung derartiger Katalysatoren erst mit der Entwicklung der DENOX-Anlagen in den letzten zehn bis zwanzig Jahren in zunehmendem Maße üblich geworden ist, verfügt die Fachwelt nur über geringe Kenntnis hinsichtlich der Wiederverwertbarkeit derselben.

In der EP-A1-0 505 881 ist beispielsweise ein Verfahren und eine Einrichtung zur Regeneration verbrauchter DENOX-Katalysatoren beschrieben, bei weichem eine Molybdän-Sauerstoffverbindung bzw. ein Vorläufer derselben auf die verbrauchten DENOX-Katalysatoren niedergeschlagen wird. Die Kosten dieses Verfahrens sind nicht unbeträchtlich.

Der vorliegenden Erfindung liegt nun die Aufgabe zugrunde, ein kostengünstiges Verfahren zur Regenerierung bzw. Wiederverwendbarkeit derartiger gebrauchter DENOX-Katalysatoren aus mit festen fossilen Brennstoffen oder auch Hausmüll, Sonderabfall und anderen kontaminierenden Brennstoffen betriebenen Feuerungsanlagen zu schaffen, durch weiches in einfacher Weise den Erfordernisssen entsprochen wird.

Unabhängig davon ist es andererseits bekannt, daß beim Betreiben von Feuerungen mit flüssigen fossilen Brennstoffen, wie Erdölprodukten, d.h. Ölen verschiedener Art, zwar manche der genannten Erscheinungen an der Katalysatoroberfläche auch auftreten, daß jedoch insgesamt die Katalysatoraktivität im Fall der Ölfeuerung nicht in demjenigen Maße abnimmt, wie dies z.B. bei der Kohlefeuerung der Fall ist, sondern diese sogar zunimmt.

Es hat sich herausgestellt, daß diese Aktivitätszunahme der Katalysatoren damit zusammenhängt, daß Erdölprodukte einen wenn auch minimalen Vanadiumgehalt aufweisen und daß sich bei der Verfeuerung dieser flüssigen Brennstoffe während des Betriebes der Anlage das Vanadium in oxidischer Form fein verteilt auf der Katalysatoroberfläche ablagert. Diese Ablagerungen führen zu einer Steigerung der Katalysatoraktivität, solange der Katalysator nicht durch mechanische Schädigungen, die nach längerem Gebrauch in allen Fällen auftreten, an die Grenze seiner Leistungsfähigkeit gelangt ist. In Falle einer anderen Feuerung ist dieses Phänomen der Aktivitätszunahme des Katalysators nicht zu beobachten.

Der gegenständlichen Erfindung liegt die Erkenntnis zugrunde, daß der Wirkungsgrad von aus DENOX-Anlagen von mit festen fossilen Brennstoffen od. dgl. betriebenen Feuerungen, deren katalytischer Wirkungsgrad unter ihren anfänglichen Wirkungsgrad abgesunken war bzw. die durch ihren Einsatz in derartigen Anlagen bis zur Unbrauchbarkeit desaktiviert waren, durch Einwirkung von Rauchgasen aus der Verbrennung flüssiger fossiler vanadiumhaltiger Brennstoffe nicht weiter abnimmt, sondern daß dieser sogar zunimmt, sodaß diese Katalysatoren, soferne noch eine ausreichende mechanische Stabilität der Katalysatoren gewährleistet ist, zur katalytischen Denoxierung der Rauchgase von mit flüssigen fossilen, vanadiumhaltigen Brennstoffen betriebenen Feuerungsnalagen verwendbar sind.

Die gegenständliche Erfindung betrifft somit ein Verfahren zur katalytischen Reduktion von in den Rauchgasen einer mit flüssigen fossilen, vanadiumhaltigen Brennstoffen betriebenen Feuerung enthaltenen Stickoxiden mit Ammoniak (DENOX-Verfahren), bel welchem die Rauchgase über einen DENOX-Katalysator auf der Basis eines keramischen Materials mit katalytisch aktiven Metalloxiden geleitet werden. Ein derartiges Verfahren ist erfindungsgemäß dadurch gekennzeichnet, daß mindestens als Teil des Katalysators ein in einer DENOX-Anlage einer mit beliebigen Brennstoffen, ausgenommen flüssigen fossilen Brennstoffen, insbesondere mit festen fossilen Brennstoffen, betriebenen Feuerung in Gebrauch gewesener Katalysator, dessen Wirkungsgrad niedriger als sein ursprünglicher Wirkungsgrad ist, eingesetzt wird.

Die gegenständliche Erfindung betrifft weiters ein Verfahren zur Regenerierung eines in einer DENOX-Anlage zur katalytischen Reduktion von in den Rauchgasen einer mit beliebigen Brennstoffen, ausgenommen flüssigen fossilen Brennstoffen, insbesondere mit festen fossilen Brennstoffen, betriebenen Feuerung enthaltenen Stickoxiden mit Ammoniak in Gebrauch gewesenen DENOX-Katalysators auf der Basis eines keramischen Materials mit katalytisch aktiven Metalloxiden, dessen Wirkungsgrad niedriger als sein ursprünglicher Wirkungsgrad ist. Dieses Regenerierungsverfahren ist erfindungsgemäß dadurch gekennzeichnet, daß der in Gebrauch gewesene Katalysator mindestens als Teil eines in einer DENOX-Anlage einer mit flüssigen fossilen, vanadiumhaltigen Brennstoffen betriebenen Feuerung erforderlichen Katalysators eingesetzt wird.

In allen diesen Fällen wird durch die Einwirkung der Rauchgase aus der Ölfeuerung ein Anstieg des Vanadiumgehaltes in dem verwendeten Katalysator bewirkt, wobei angenommen wird, daß dieser für die erzielte Aktivitätssteigerung des Katalysators zumindest mitverantwortlich ist. Durch die Einwirkung der rasch strömenden Rauchgase auf die gebrauchten Katalysatoren in der DENOX-Anlage der Ölfeuerung erfahren diese Katalysatoren außerdem eine Oberflachenbehandlung, welche in mancher Hinsicht den bisher vorgesehlagenen Regenerierungsverfahren entspricht. Einerseits werden die Ablagerungen aus dem ersten Gebrauch teilweise abgetragen und andererseits wird die Oberfläche wieder in einen katalytisch aktiven Zustand übergeführt.

Sofern nun der zu regenerierenden Katalysator nicht bis zu einem chemisch und mechanisch vollständig verbrauchten Zustand verwendet wurde, kann er mit Erfolg in einer DENOX-Anlage einer mit flüssigen fossilen, vanadiumhaltigen Brennstoffen betriebenen Feuerungsanlage eingesetzt werden. Somit erweist sich ein technisches Abfallprodukt als wertvoller Gegenstand für ein anders gelagertes Verfahren.

Als besonders überraschend und vorteilhaft erweist sich jener Fall, bei dem die erzielte Aktivitätssteigerung so weit geht, daß der regenerierte Katalysator sogar wieder zumindest zum Teil als DENOX-Katalysator einer mit festen fossilen Brennstoffen od. dgl. betriebenen Anlage eingesetzt werden kann.

Die Vorteile der erfindungsgemäßen Verfahren sind vor allem dann deutlich, wenn der Betrieb beider Arten von Feuerungsanlagen in einer Hand vereint ist. Es ist dabei vorteilhaft, die Ausmaße der Katalysatorkammern aufeinander so abzustimmen, daß die Katalysatormodule ohne Veränderung und ohne Umbau von einer ersten Anlage in die zweite Anlage übernommen werden können.

Die Erfindung ist nachstehend anhand eines Ausführungsbeispiels erläutert:

**Anlage A (fester fossiler Brennstoff)**

*Randbedingungen:*

| Brennstoff: | Steinkohle |
|---|---|
| Zusammensetzung: | |
| Kohlenstoff: | 87,96 % |
| Wasserstoff: | 5,23 % |
| Schwefel: | 0,78 % |
| Stickstoff: | 1,37 % |
| Chlorid: | 0,11 % |
| Sauerstoff: | 4,55 % |
| Rauchgasmenge: | 714.600 Nm$^3$/h |
| Rauchgastemperatur: | 400°C |
| Stickstoffoxidreduzierung: | 80 % |
| Ammoniakschlupf: | 5 ppm(v) |

*Rauchgaszusammensetzung:*

| Feuchte: | 8 Vol.% |
|---|---|
| Sauerstoff: | 4,3 Vol.% |
| Schwefeldioxid: | 2.400 mg/Nm$^3$ |
| Stickstoffoxide: | 1.000 mg/Nm$^3$ |
| Staub: | 20 g/Nm$^3$ |

*Kenndaten der DeNOx Anlage (Katalysator):*

| Reaktoren: | 2 Stück |
|---|---|
| Abmessungen eines Katalysatorelementes: | 150x150x990 mm |
| Katalysatorelementanzahl pro Modul: | 88 Stück |
| Modulanzahl pro Katalysatorlage und Reaktor: | 24 |
| Katalysatorlagen pro Reaktor: | 4 |
| Gesamtes installiertes Katalysatorvolumen: | 377 m$^3$ |

Nach ca. 41.000 Betriebsstunden hat der ursprünglich eingebaute Katalysator ca. 50% seiner Aktivität (Leistungsfähigkeit) verloren. Um weiterhin die geforderten Leistungsdaten zu erreichen, wird eine der vier Katalysatorlagen (48 Module mit ca. 94 m$^3$ Katalysator) gegen neue Katalysatoren ausgetauscht.

**Anlage B (flüssiger fossiler Brennstoff)**

*Randbedingungen:*

| Brennstoff: | Heizöl Schwer |
|---|---|
| Zusammensetzung: | |
| Heizwert (H$\mu$): | 39 MJ/Kg |
| Wasser: | 0,5 % |
| Schwefel: | 3,0 % |
| Vanadiumgehalt: | 100 ppm |
| Rauchgasmenge: | 457.850 Nm$^3$/h |
| Rauchgastemperatur: | 360°C |
| Stickstoffoxidreduzierung: | 77 % |
| Ammoniakschlupf: | 5 ppm(v) |

*Rauchgaszusammensetzung:*

| Feuchte: | 12,33 Vol.% |
|---|---|
| Sauerstoff: | 1,2 Vol.% |
| Schwefeldioxid: | 5.250 mg/Nm$^3$ |
| Stickstoffoxide: | 650 mg/Nm$^3$ |
| Staub: | 0,17 g/Nm$^3$ |

*Kenndaten der DeNOx Anlage (Katalysator):*

Die DeNOx Anlage wird mit einer Reaktorbox und drei Katalysatorlagen ausgeführt. In zwei Katalysatorlagen werden je 20 Module der in der Anlage A ausgebauten Katalysator-Module eingebaut. In der dritten Lage wird ein neuer Katalysator mit nachfolgenden Daten eingebaut:

| Abmessungen eines Katalysatorelements: | 150x150x505 mm |
|---|---|
| Katalysatorelementanzahl pro Modul: | 88 Stück |
| Modulanzahl pro Katalysatorlage: | 20 |
| Katalysatorvolumen: | 20 m$^3$ |

**Patentansprüche**

1. Verfahren zur katalytischen Reduktion von in den Rauchgasen einer mit flüssigen fossilen, vanadiumhaltigen Brennstoffen betriebenen Feuerung enthaltenen Stickoxiden mit Ammoniak (DENOX-Verfahren), bei welchem die Rauchgase über einen DENOX-Katalysator auf der Basis eines keramischen Materials mit katalytisch aktiven Metalloxiden geleitet werden, **dadurch gekennzeichnet**, daß mindestens als Teil des Katalysators ein in einer DENOX-Anlage einer mit beliebigen Brennstoffen, ausgenommen flüssigen fossilen Brennstoffen, insbesondere mit festen fossilen Brennstoffen, betriebenen Feuerung in Gebrauch gewesener Katalysator, dessen Wirkungsgrad niedriger als sein ursprünglicher Wirkungsgrad ist, eingesetzt wird.

2. Verfahren zur Regenerierung eines in einer DENOX-Anlage zur katalytischen Reduktion von in den Rauchgasen einer mit beliebigen Brennstoffen, ausgenommen flüssigen fossilen, Brennstoffen, insbesondere mit festen fossilen Brennstoffen, betriebenen Feuerung enthaltenen Stickoxiden mit Ammoniak in Gebrauch gewesenen DENOX-Katalysators auf der Basis eines keramischen Materials mit katalytisch aktiven Metalloxiden, dessen Wirkungsgrad niedriger als sein ursprünglicher Wirkungsgrad ist, **dadurch gekennzeichnet**, daß der in Gebrauch gewesene Katalysator mindestens als Teil eines in einer DENOX-Anlage einer mit flüssigen fossilen vanadiumhaltigen Brennstoffen betriebenen Feuerung erforderlichen Katalysators eingesetzt wird.

3. Verfahren nach Patentanspruch 1, **dadurch gekennzeichnet,** daß mindestens als Teil des Katalysators ein in einer DENOX-Anlage einer mit Steinkohle, Koks, Braunkohle, anderen Ballastkohlen, Holz, Kunststoff, Hausmüll, festen und flüssigen Sonderabfällen betriebenen Feuerung in Gebrauch gewesener Katalysator, dessen Wirkungsgrad niedriger als sein ursprünglicher Wirkungsgrad ist, eingesetzt wird.

4. Verfahren nach Patentanspruch 2 zur Regenerierung eines in einer DENOX-Anlage zur katalytischen Reduktion von in den Rauchgasen einer mit Steinkohle, Koks, Braunkohle, anderen Ballastkohlen, Holz, Kunststoff, Hausmüll, festen und flüssigen Sonderabfällen betriebenen Feuerung enthaltenen Stickoxiden mit Ammoniak in Gebrauch gewesenen DENOX-Katalysators auf der Basis eines keramischen Materials mit katalytisch aktiven Metalloxiden, dessen Wirkungsgrad niedriger als sein ursprünglicher Wirkungsgrad ist, **dadurch gekennzeichnet,** daß der in

7

Gebrauch gewesene Katalysator mindestens als Teil eines in einer DENOX-Anlage einer Feuerung mit flüssigen fossilen, vanadiumhaltigen Brennstoffen erforderlichen Katalysators eingesetzt wird.

## Claims

1. A process for the catalytic reduction, using ammonia, of nitrogen oxides contained in the flue gases of a combustion plant operated with liquid fossil, vanadium-containing fuels (DENOX process), in which the flue gases are passed over a DENOX catalyst based on a ceramic material comprising catalytically active metal oxides, **characterised in that** the catalyst consists at least in part of a catalyst which has been used in the DENOX installation of a combustion plant operated with any fuels except liquid fossil fuels, in particular with solid fossil fuels, the efficiency of the latter catalyst being less than its original efficiency.

2. A process for regenerating a DENOX catalyst based on a ceramic material comprising catalytically active metal oxides, which has been used in a DENOX installation for the catalytic reduction, using ammonia, of nitrogen oxides contained in the flue gases of a combustion plant operated with any fuels except liquid fossil fuels, in particular with solid fossil fuels, the efficiency of said catalyst being less than its original efficiency, **characterised in that** the used catalyst is used as at least part of a catalyst required by the DENOX installation of a combustion plant operated with liquid fossil, vanadium-containing fuels.

3. A process according to claim 1, **characterised in that** the catalyst consists at least in part of a catalyst which has been used in the DENOX installation of a combustion plant operated with coal, coke, brown coal, other low grade coals, wood, plastics, household waste or solid and liquid hazardous waste, the efficiency of the latter catalyst being less than its original efficiency.

4. A process according to claim 2 for regenerating a DENOX catalyst based on a ceramic material comprising catalytically active metal oxides, which has been used in a DENOX installation for the catalytic reduction, using ammonia, of nitrogen oxides contained in the flue gases of a combustion plant operated with coal, coke, brown coal, other low grade coals, wood, plastics, household waste or solid and liquid hazardous waste, the efficiency of said catalyst being less than its original efficiency, **characterised in that** the used catalyst is used as at least part of a catalyst required by the DENOX installation of a combustion plant operated with liquid fossil, vanadium-containing fuels.

## Revendications

1. Procédé de réduction catalytique d'oxydes d'azote contenus dans les fumées d'une chauffe exploitée par des combustibles liquides fossiles, contenant du vanadium, à l'aide d'ammoniac (procédé DENOX), dans lequel les fumées sont envoyées sur un catalyseur DENOX à base d'un matériau céramique avec des oxydes métalliques à activité catalytique, caractérisé en ce qu'on utilise, en tant qu'au moins une partie du catalyseur, un catalyseur nécessaire dans une installation DENOX d' une chauffe exploitée avec des combustibles quelconques, à l'exception des combustibles fossiles liquides, en particulier avec des combustibles fossiles solides, catalyseur dont le rendement est inférieur à son rendement initial.

2. Procédé de régénération d'un catalyseur DENOX qui a été utilisé dans une installation DENOX pour assurer la réduction catalytique, avec de l'ammoniac, d'oxydes d'azote contenus dans les fumées d'une chauffe exploitée avec des combustibles quelconques, à l'exception des combustibles fossiles liquides, en particulier avec des combustibles fossiles solides, le catalyseur DENOX étant à base d'un matériau céramique avec des oxydes métalliques à activité catalytique et ayant un rendement inférieur à son rendement initial, caractérisé en ce que le catalyseur qui a été utilisé est utilisé au moins en tant que partie d'un catalyseur nécessaire dans une installation DENOX d'une installation de chauffe exploitée avec des combustibles fossiles liquides contenant du vanadium.

3. Procédé selon la revendication 1, caractérisé en ce qu'on utilise au moins en tant que partie du catalyseur un catalyseur qui a été utilisé dans une installation DENOX d'une chauffe exploitée avec de la houille, du coke, de la lignite, d'autres charbons ballasts, du bois, des plastiques, des ordures ménagères, des déchets spéciaux solides et liquides, et dont le rendement est inférieur à son rendement initial.

4. Procédé selon la revendication 2, pour régénérer un catalyseur DENOX, qui a été utilisé avec de l'ammoniac dans une installation DENOX destinée à la réduction catalytique d'oxydes d'azote contenus dans les fumées d'une chauffe exploitée avec de la houille, du coke, de la lignite, d'autres charbons de ballast, du bois, des plastiques, des ordures ménagères, des déchets spéciaux solides et liquides, le catalyseur étant à base d'un matériau céramique avec des oxydes métalliques à activité catalytique, et ayant un rendement inférieur à son rendement initial, caractérisé en ce que le catalyseur qui a été utilisé est utilisé au moins en tant que partie d'un catalyseur nécessaire dans une installation DENOX d'une chauffe avec des combustibles fossiles liquides contenant du vanadium.